# EUROPÄISCHE PATENTANMELDUNG

(11) **EP 0 899 592 A1**
(43) Veröffentlichungstag der Anmeldung: **03.03.1999**
(21) Anmeldenummer: 97114880.4
(22) Anmeldetag: 28.08.1997
(51) Int. Cl.: G02B 6/293, G02B 6/42, H04B 10/24

(54) **Optischer Duplexer**

(71) Anmelder: ROBERT BOSCH GMBH, 70442 Stuttgart (DE)
(72) Erfinder: Mueller-Fiedler, Roland, Dr., 71229 Leonberg (DE); Mayer, Klaus-Michael, Dr., 70839 Gerlingen (DE); Rech, Wolf-Henning, Dr., 71229 Leonberg (DE); Hauer, Heiner, 70734 Fellbach (DE); Kuke, Albrecht, Dr., 71549 Auenwald (DE); Schwander, Thomas, Dr., 71522 Backnang (DE); Spatscheck, Thomas, 74535 Mainhardt (DE)

(57) **Zusammenfassung**

Bei einem optischen Duplexer ist auf einer der beiden flachen Seiten eines Trägers (1) aus Silizium eine anisotrop geätzte V-Nut zur Aufnahme eines faserförmigen Lichtwellenleiters (13) vorgesehen. Die Stirnseite (5) der V-Nut begrenzt eine planparallele Platte (15) aus Träger-Material, die auf mindestens einer Seite mit einer Filterschicht versehen ist.

Die Rückseite der Platte (15) begrenzt eine Durchtrittsöffnung (7), die durch anisotropes Ätzen zunächst von der Unterseite (11) und dann von der Oberseite (10) des Trägers entstanden ist.

Durch diese Verfahrensweise wird erreicht, daß die Dicke der Platte (15) nur von der Breite eines Steges abhängt, der während des Herstellungsprozesses als Teil einer gegen das Ätzmedium resistenten Passivierungsschicht auf der Oberseite (10) des Trägers (1) angebracht wurde.

Die Erfindung ist geeignet für Komponenten für die optische Nachrichtentechnik, insbesondere Wellenlängenmultiplexer, für den Modulaufbau auf Silizium-Motherboards und die Mikrosystemtechnik.

## Beschreibung

### Stand der Technik

Die Erfindung geht aus von der Gattung, wie in den unabhängigen Ansprüchen 1 und 11 angegeben.

Es ist bereits ein Wellenlängenduplexer für den Wellenlängenbereich des nahen Infrarot in Silizium-Mikromechanik bekannt (DE 44 07 451 C1). Er besteht aus einem Träger aus Silizium, der auf einer seiner beiden flachen Seiten (im Folgenden als Flachseiten bezeichnet), nämlich auf seiner 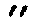 Oberseite", zwei miteinander fluchtende, anisotrop geätzte V-Nuten aufweist, in denen Lichtwellenleiter liegen. Jeweils eine schräg zu den Flachseiten verlaufende Stirnseite der V-Nuten ist mit einem wellenlängenselektiven Filter beschichtet. In dem Bereich, den die vom Filter reflektierte Strahlung erreicht, befindet sich auf dem Träger ein optisches Empfängerelement. Auf der anderen Flachseite ( 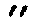 Unterseite") des Silizium-Trägers befindet sich eine Vertiefung, in der eine Linse angebracht ist. Das Trägermaterial zwischen der schrägen Stirnseite einer V-Nut und der gegenüberliegenden schrägen Wand der auf der Unterseite angebrachten Vertiefung kann als Ausschnitt einer planparallelen Platte angesehen werden. Licht aus einem der Lichtwellenleiter gelangt zum ersten wellenlängenselektiven Filter, wo es je nach Wellenlänge entweder auf den optischen Empfänger reflektiert oder transmittiert wird. Der transmittierte Anteil gelangt durch den infrarot-transparenten, plattenförmigen Träger aus Silizium zur Linse, von wo es auf einem ebensolchen Weg auf die Endfläche des gegenüberliegenden Lichtwellenleiters abgebildet wird. Nachteilig ist an diesem Aufbau, daß die Toleranzanforderungen an die Dicke des Trägers (Wafers), den Durchmesser der Linse und die Ausrichtung der ober- und unterseitigen Lithographie sehr hoch sein müssen, um noch eine effektive Überkopplung des zu transmittierenden Lichts von einem Lichtwellenleiter in den anderen zu erreichen.

In der deutschen Patentanmeldung Nr. 19 604 390, 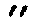 Verfahren zum Herstellen eines Durchbruchs", vom selben Anmelder ist ein Verfahren vorgeschlagen, in Silizium-Wafern durch naßchemisches Ätzen von der Waferrückseite her hochpräzise Durchgangsöffnungen anzubringen, deren vorderseitige Öffnung einschließlich des Verlaufs unmittelbar unterhalb der Vorderseite in Lage und Größe ausschließlich von auf der Vorderseite angebrachten Strukturen definiert wird. Dadurch werden Fehler, wie sie durch Justiertoleranzen eines zweiseitigen Lithographieprozesses und die Variation der Waferdicke entstehen, von vorneherein vermieden. Aus DE 44 06 335 A1 ist eine strahlteilende, insbesondere wellenlängenselektive Abzweigung bekannt, die einen transparenten, mit einer wellenlängenselektiven filternden Schicht versehenen Keil beinhaltet, der ohne weitere optisch wirksame Elemente wie Linsen oder ähnlichem unmittelbar zwischen zwei Lichtwellenleiter positioniert ist. Durch Verwendung eines brechungsindexangepaßten Klebers sowie die geringen Abmessungen des Keils kann ein hoher Koppelwirkungsgrad ohne abbildende Elemente erreicht werden.

### Vorteile der Erfindung

Der Anmeldungsgegenstand mit den Merkmalen des Anspruchs 1 beziehungsweise 11 hat folgenden Vorteil.
Der Wellenlängenduplexer nach der Erfindung nutzt ähnlich wie die oben beschriebenen Wellenlängenduplexer eine filternde Schicht zur Wellenlängentrennung. Er kann mit Glasfaseranschlüssen versehen sein, ist auf einem Träger aus Silizium aufgebaut und kommt ohne weitere optische Komponenten (z.B. aus Glas oder Silizium) aus, wodurch eine einfache Montage erreicht wird. Der Wellenlängenduplexer ist für den Infrarot-Bereich, insbesondere für die in der Telekommunikation wichtigen Wellenlängenbereiche bei 1,3 µm und 1,55 µm geeignet. Die Toleranzanforderungen an die Dicke des Trägers (Wafers) aus Silizium und die Genauigkeit der zweiseitiger Lithographie lassen sich mit marktüblichen Teilen und Anlagen leicht erfüllen.

Vorteilhafte Weiterbildungen sind in den abhängigen Ansprüchen angegeben.

### Zeichnungen

Ausführungsbeispiele der Erfindung sind in den Zeichnungen gezeigt und in der nachfolgenden Beschreibung näher erläutert. Es ist dargestellt in
- Figur 1:: ein Längsschnitt durch ein erstes Ausführungsbeispiel eines erfindungsgemäßen Duplexers,
- Figur 2:: Aufsichten auf beide Flachseiten des Duplexers nach Figur 1 in verschiedenen Herstellungsstadien,
- Figur 3:: Masken auf den Flachseiten für den Herstellungsprozeß,
- Figur 4:: Längsschnitte entsprechend Figur 1, jedoch in unterschiedlichen Phasen des vorausgegangenen Herstellungsprozesses,
- Figur 5:: ein Längsschnitt durch ein zweites Ausführungsbeispiel eines erfindungsgemäßen Duplexers.

### Beschreibung der Ausführungsbeispiele

Aufbau eines bevorzugten Ausführungsbeispiels:

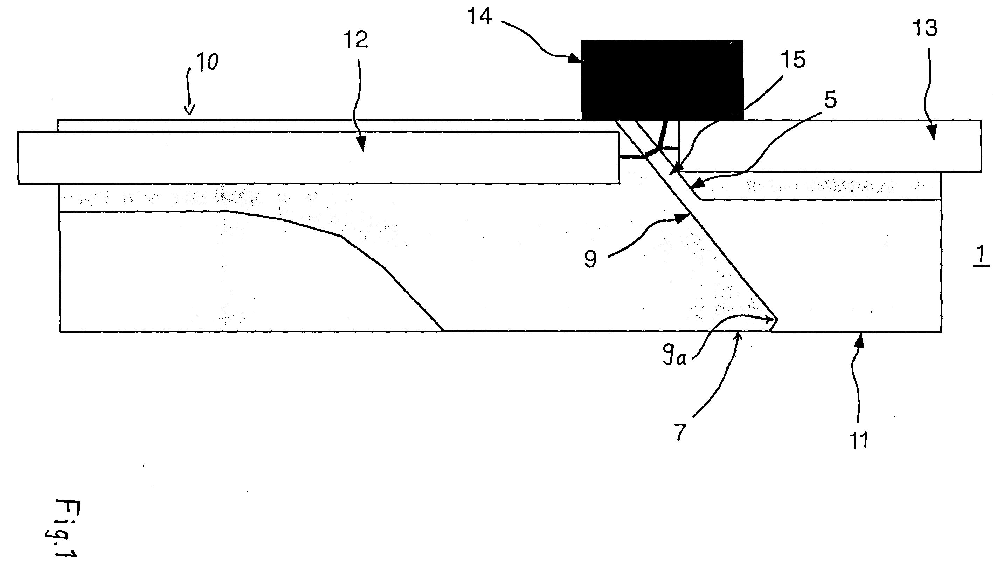

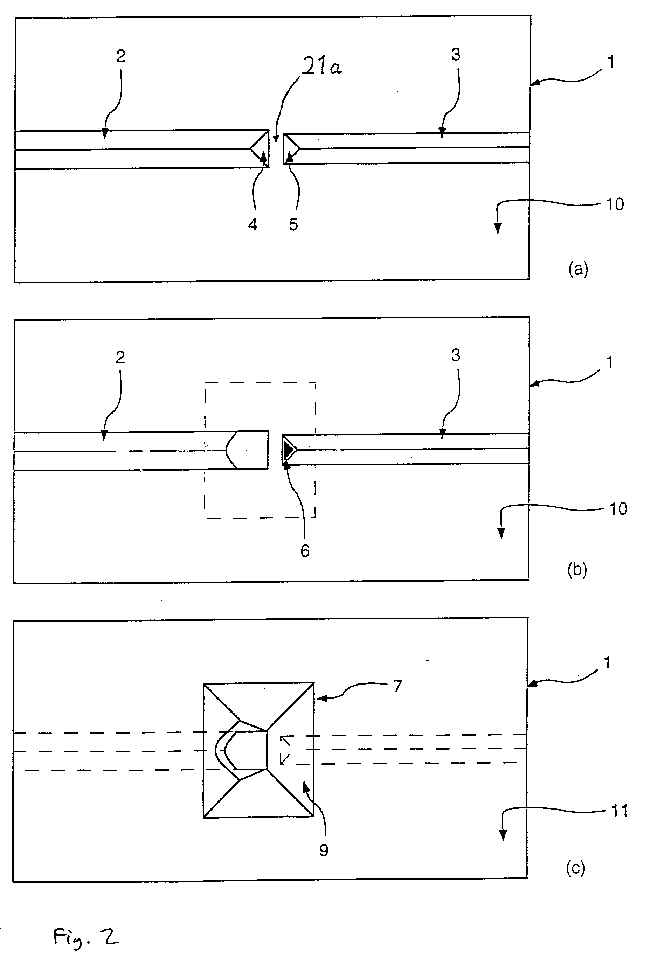

Der erfindungsgemäße Duplexer, insbesondere Wellenlängenduplexer (Fig. 1 und 2) weist einen plattenförmigen Träger 1 aus Silizium auf. Die obere Flachseite 10 wird durch naßchemisches Ätzen so strukturiert, daß zwei Vertiefungen, nämlich miteinander fluchtende V-Nuten 2, 3 unterschiedlicher Breite und Tiefe entstehen, die durch eine schmale planparallele Platte 15 aus Trägermaterial voneinander getrennt sind und zu Beginn des Herstellungsprozesses (Figur 2a) jeweils Stirnseiten 4, 5 aufweisen, die in bezug auf die Flachseiten schräg verlaufen. Diese V-Nuten sind in ihrer Breite und Tiefe so bemessen, daß darin faserförmige Lichtwellenleiter (Glasfasern) 12, 13 eingelegt werden können und nach dem Einlegen und Fixieren sehr präzise in einer Sollposition ausgerichtet sind.

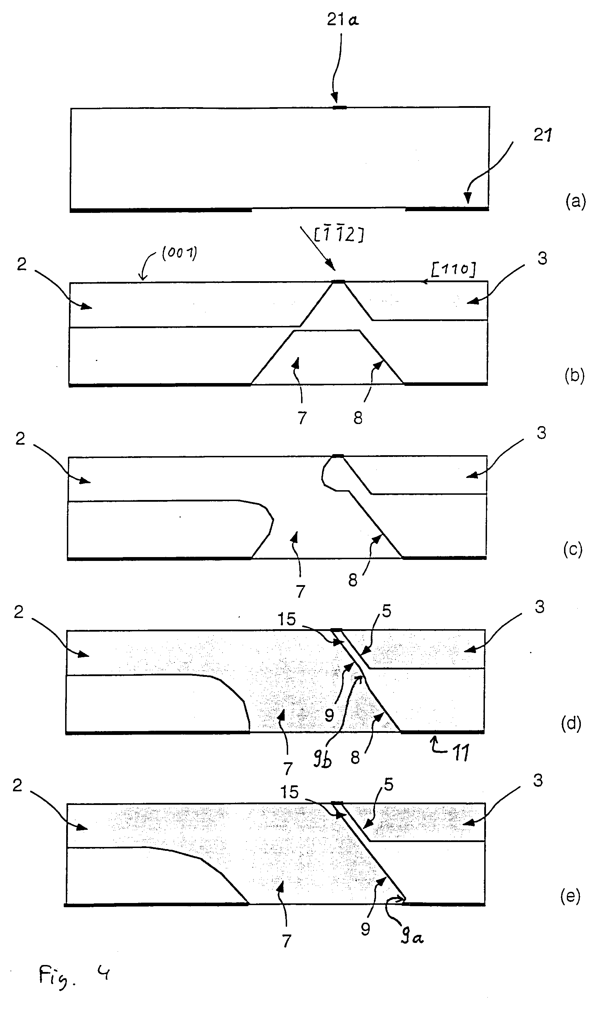

Gleichzeitig wird auf der unteren Flachseite 11 ebenfalls naßchemisch eine Durchbruchsöffnung 7 hergestellt, die sich zur oberen Flachseite hin durch den Träger 1 (Wafer) wie ein inverser Pyramidenstumpf (Hohlpyramidenstumpf) verjüngt und an der oberen Flachseite im Endbereich der breiteren V-Nut 2 mündet und deren schräge Stirnseite 4 dabei zerstört. Die der schmaleren V-Nut 3 zugeneigte Seitenfläche 8 (Figur 4) (bzw. Seitenfläche 9, wie später noch erläutert wird) dieses Hohlpyramidenstumpfes bildet zusammen mit der Stirnseite 5 der schmaleren V-Nut 3 bereichsweise eine planparallele Platte 15 aus Silizium.

Durch geeignete relative Anordnung und Größe der Fenster (Ätzfenster) auf den Flachseiten kann der Ätzprozeß so geführt werden, daß die Lage der oberen Öffnung der Durchbruchsöffnung 7 lediglich von der Anordnung der Fenster auf der oberen Flachseite 10 abhängt und Dickenvariationen des Wafers sowie Lagetoleranzen des zweiseitigen Lithographieprozesses keine Rolle spielen. Dadurch ist es möglich, die entstandene planparallele Platte 15 mit präziser Dicke zu fertigen.

Die Stirnseite 5 der schmaleren V-Nut 3 wird nun mit dem optischen Filter, insbesondere der gewünschten wellenlängeselektiven Schicht 6 versehen. Die benachbart liegende Seitenfläche 8 bzw. 9 der zur Flachseite 11 hin breiter werdenden Durchbruchsöffnung 7 wird hingegen optisch entspiegelt, um für das transmittierte Licht die sonst an der Grenzfläche auftretenden Reflexionsverluste zu vermeiden.

Schließlich werden in beide V-Nuten 2, 3 faserförmige Lichtwellenleiter 12, 13 eingelegt und fixiert. Der Höhenunterschied der Lage der Lichtwellenleiterachsen, der sich durch die unterschiedliche Tiefe der V-Nuten 2 und 3 einstellt, ist dabei so bemessen, daß der bei der Transmission durch die schräg im Strahlengang stehende planparallele Platte 15 auftretende Strahlversatz gerade kompensiert wird und daher bei der Transmissionswellenlänge eine effiziente optische Kopplung zwischen den beiden Lichtwellenleitern 12 und 13 ermöglicht wird.

Oberhalb der mit der filternden Schicht 6 versehenen Stirnseite 5 der schmaleren V-Nut 3 ist auf der Flachsseite 10 ein Photodetektor 14 angebracht, der die von der filternden Schicht 6 reflektierte Strahlung aus dem in der schmaleren V-Nut 3 liegenden Lichtwellenleiter 13 detektiert und seinen Photostrom einer nachfolgenden Empfangselektronik zuführt.

Herstellung des bevorzugten Ausführungsbeispiels:

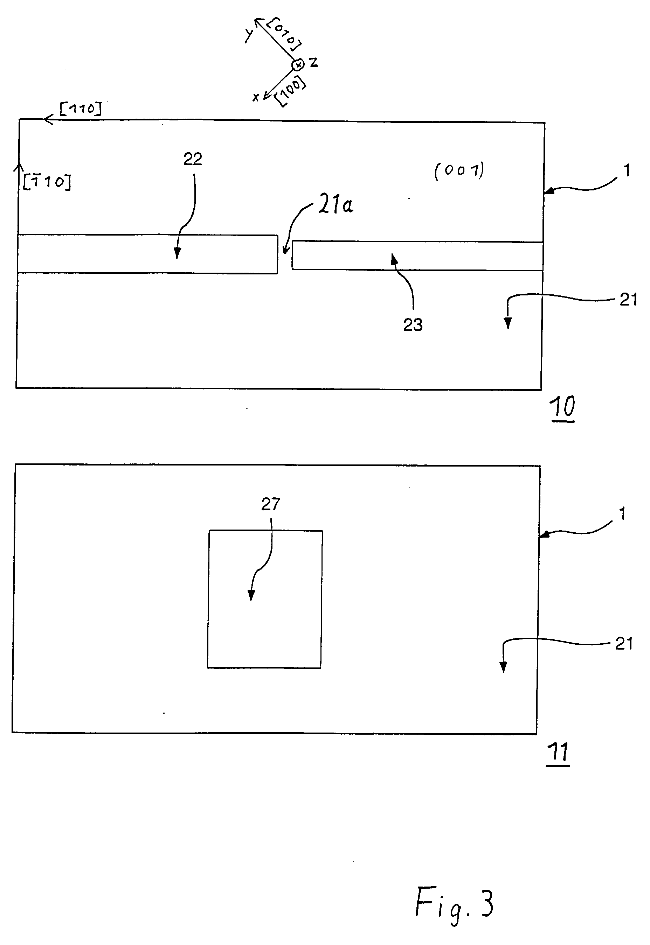

Die Herstellung des Trägers 1 geht aus von Silizium-Wafern mit parallel zur [1 0 0]-Kristallrichtung und parallel zu einer (0 0 1)-Kristallebene orientierten Flachseiten (Kennzeichnung durch Millersche Indizes). Die Wafer werden beidseitig mit einer gegen das verwendete Ätzmedium KOH resistenten Passivierungsschicht versehen. Die Passivierungsschicht 21 (Figur 3) wird sodann mit den Standardmethoden der Photolithographie ausgehend von einer Photomaske beidseitig strukturiert, wodurch Fenster (Ätzfenster) entstehen, an denen die ungeschützte Silizium-Oberfläche zugänglich ist. Fig. 3 zeigt ein Beispiel für geeignete Fensterstrukturen, wobei die dargestellten Strukturen mehrfach auf dem Silizium-Wafer erzeugt werden, um die Fertigung im Vielfach-Nutzen zu ermöglichen. Kennzeichnend sind auf der Flachseite 10 zwei längliche Fenster 22, 23 mit dazwischen liegendem Steg 21a, die zur Herstellung der V-Nunuten für die Aufnahme der Lichtwellenleiter (Glasfasern) dienen, und an der gegenüber liegenden Flachseite 11 eine Fensteröffnung 27, die gegenüber dem Endbereich des Fensters 22 angebracht und in der Größe so bemessen ist, daß während des Ätzprozesses zusammen mit der Ätzgrube, die sich ausgehend vom Fenster 22 ausbildet, eine Durchbruchsöffnung durch den Wafer entsteht. Die Kanten des Steges 21a begrenzen die V-Nuten 22, 23 stirnseitig und verlaufen in einer kristallographischen [ 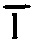 1 0]-Richtung.

Fig. 4 zeigt einen Schnitt durch den Wafer entlang der Symmetrieebene in verschiedenen Phasen (a) bis (e) des Ätzvorgangs. In Fig 4(a) ist der Ausgangszustand dargestellt, in Fig. 4(b) ist der Ätzprozeß gerade soweit fortgeschritten, daß noch kein Durchgang durch den Wafer entstanden ist. Bis zu diesem Zeitpunkt bilden sich nuten- und wannenförmige Vertiefungen mit Wandflächen, die durch ätzbegrenzende, kristallographische (1 1 1)-Ebenen gebildet werden und einen Winkel von 54,7° mit den Flachseiten 10, 11 einschließen. Durch die im weiteren Verlauf entstehende Durchbruchsöffnung 7 werden diese (1 1 1)-Kristallebenen gestört, wodurch neue Angriffspunkte für die Ätzflüssigkeit entstehen. Fig. 4(c) zeigt diesen Zustand.

Im weiteren Verlauf stellt sich eine neue ätzbegrenzende (1 1 1)-Kristallebene 9 ein, deren Lage durch eine Kante eines Steges 21a der Passivierungsschicht 21 definiert ist. Der Übergangsbereich zwischen der neuen (1 1 1)-Kristallebene 9 und der bisherigen (1 1 1)- Kristallebene 8 der Durchbruchsöffnung 7 wandert nach unten (Fig. 4 d und e). Sobald sich die Kristallebene 9 ausreichend weit ausdehnt, kann der Ätzvorgang abgebrochen werden. Es bleibt eine konkave Wölbung 9a oder 9b zwischen der Kristallfläche 9 (die an einer Kante des Steges 21a endet) und der Flachseite 11, die dem Steg 21a gegenüber liegt.

Da die Lage sowohl der Kristallebene 9 als auch der Stirnseite 5 der V-Nut 3 von der gleichen Passivierungsschicht 21 auf dem Steg 21a definiert werden, ist die Dicke der entstehenden planparallelen Platte 15 sehr präzise. Damit ist auch der durch die Platte 15 verursachte Strahlversatz der transmittierten Strahlung (insbesondere Licht) genau vorhersagbar und kann daher bei der Festlegung der Tiefe und Breite der V-Nuten 2, 3 berücksichtigt werden.

Um die gewünschte Funktion der Wellenlängentrennung des Duplexers zu erreichen, wird auf die Stirnseite 5 (möglicherweise statt dessen oder zusätzlich auch auf die Wandfläche 9 der Durchbruchsöffnung 7) die gewünschte Schicht zur Filterung aufgebracht, wozu bevorzugt Aufdampfverfahren in Frage kommen. Die jeweils nicht mit der filternde Schicht versehene Fläche (Wandfläche 9 beziehungsweise Stirnseite 5) muß entspiegelt werden, da der hohe Brechungsindex von Silizium (ca. 3,5) sonst an der Grenzfläche zu erheblichen unerwünschten Reflexionen führt. Die filternde Schicht kann wellenlängenabhängig entweder reflektieren oder transmittieren, es kann sich aber in einer anderen Ausgestaltung auch um eine schwach oder nicht wellenlängenabhängige Teilerschicht handeln.

Der Photodetektor 14 wird durch Kleben oder Löten so oberhalb der Stirnseite 5 der V-Nut 3 montiert, daß das aus dem Lichtwellenleiter 13 kommende und an der Stirnseite 5 oder der Wandfläche 9 (je nachdem, welche die erste filternde Schicht trägt) reflektierte Licht den aktiven Bereich des Photodetektors trifft und dort zu einem Photostrom führt. Als Photodetektor kommen alle für den gewünschten Wellenlängenbereich geeigneten Detektoren in Frage, insbesondere InGaAs-PIN-Detektoren. Wegen der hohen erreichbaren Präzision und dem kleinen Abstand zwischen der Endfläche des Lichtwellenleiters 13 und dem Photodetektor 14 können auch solche Photodetektoren eingesetzt werden, die eine sehr kleinflächige aktive Zone haben und dadurch eine hohe elektrische Bandbreite aufweisen.

Die beiden Lichtwellenleiter 12, 13 werden in einem letzten Schritt in die beiden V-Nuten 2, 3 eingelegt und dadurch in Querrichtung automatisch justiert. Zur Justierung in Achsrichtung werden sie jeweils fast bis zum Anschlag eingeschoben. Der Zwischenraum zwischen einem der Lichtwellenleiter 12 beziehungsweise 13 einerseits und der planparallelen Platte 15 andererseits kann mit einem transparenten Medium, z.B. einem geeigneten Kleber, gefüllt sein oder leer bleiben. Die Endflächen der Lichtwellenleiter können (wie gewöhnlich) senkrecht zur Achsrichtung hergestellt sein oder statt dessen schräg zur Achse des Lichtwellenleiters verlaufen; im letzteren Fall wird die Montage allerdings aufwendiger, da die Lichtwellenleiter zusätzlich im Winkel richtig orientiert sein müssen, dafür machen sich Reflexionen an der Endfläche des Lichtwellenleiters (speziell dann, wenn kein Kleber verwendet wird) nicht bemerkbar, da sie nicht in den geführten Wellenmodus rückkoppeln.

In einer bevorzugten Ausgestaltung ist an den Lichtwellenleiter 12 ein optischer Sender, vorzugsweise eine Halbleiter-Laserdiode, mit einem Faserpigtail angekoppelt. Dessen Wellenlänge muß dabei dem Transmissionsbereich der Schicht 6 angepaßt sein. Der Lichtwellenleiter 13 ist vorzugsweise mit einer Lichtwellenleiter-Übertragungsstrecke verbunden.

Statt dessen können an den Lichtwellenleiter 12 aber auch andere optische Baugruppen, z.B. weitere Empfangsmodule oder kombinierte Sende-Empfangsmodule angeschlossen werden. Ebenso ist es denkbar, daß dort zunächst eine weitere Lichtwellenleiter-Übertragungsstrecke angeschlossen wird.

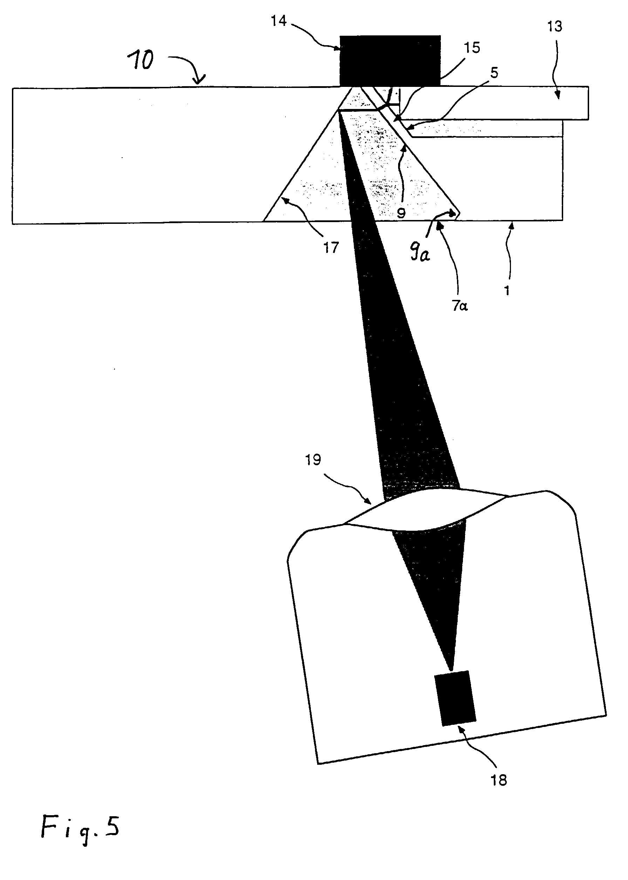

Eine weitere Ausgestaltung ist in Fig. 5 im Schnitt dargestellt. Hierbei entfällt der Lichtwellenleiter 12 und dessen Aufnahmenut. Statt dessen wird die Strahlung eines unterhalb des Trägers 1 angeordneten, weiteren optischen Bauelements 18, z.B. einer Halbleiter-Laserdiode, von einer Innenwandfläche 17 (die in einer (1 1 1)-Ebene liegt) einer Durchbruchsöffnung 7a umgelenkt und dann durch die planparallele Platte 15 transmittiert und in den Lichtwellenleiter 13 eingekoppelt. In dieser Ausgestaltung ist wegen des großen Abstands zwischen dem Bauelement 18 und dem Lichtwellenleiter 13 für eine verlustarme optische Kopplung die Anbringung eines oder mehrerer Abbildungselemente 19, z.B. Linsen, erforderlich. Für die Bauelemente 18 und 19 sowie deren Anordnung zueinander besteht eine Vielzahl von Möglichkeiten, die nicht auf die dargestellte Anordnung beschränkt sein sollen.

Die obere Stumpffläche, die der Grundfläche des Hohlpyramidenstumpfes gegenüber liegt, welcher die Durchbruchsöffnung 7a bildet, liegt dort, wo während des Herstellungsprozesses ein Fenster (22a - nicht dargestellt) lag, das die Größe der Stumpffläche aufwies und an die Stelle des Fensters 22 von Figur 3 getreten ist.

Die Erfindung ist geeignet für Komponenten für die optische Nachrichtentechnik, insbesondere Wellenlängenmultiplexer, für den Modulaufbau auf Silizium-Motherboards und die Mikrosystemtechnik.

## Patentansprüche

1. Optischer Duplexer mit folgenden Merkmalen:
a) Es ist ein Träger (1) aus einkristallinem Silizium vorgesehen,
b) auf einer ersten der beiden flachen Seiten (10, 11) des Trägers (1), erste Flachseite (10) genannt, die in einer kristallographischen (0 0 1)-Ebene liegt, ist eine Vertiefung (3) vorgesehen, die eine geneigte Stirnseite (5) in einer kristallographischen (1 1 1)-Ebene mit einer Neigung aufweist, wie sie durch anisotropes Ätzen von der ersten Flachseite (10) her entsteht,
c) in der Vertiefung (3) ist ein faserförmiger Lichtwellenleiter (13) so befestigt, daß seine Endfläche der Stirnseite (5) zugewandt ist,
d) die Stirnseite (5) ist zugleich erste Wandfläche eines Trägerbereiches, der eine planparallele Platte (15) bildet und dessen planparallele zweite Wandfläche (9) eine Neigung aufweist, wie sie durch anisotropes Ätzen von derjenigen zweiten Flachseite (11) des Trägers (1) her entsteht, welche der ersten Flachseite (10) gegenüber liegt,
e) wenigstens eine der Wandflächen (5, 9) ist mit einem wellenlängenabhängigen Filter oder mit einem Strahlteiler versehen,
f) auf der ersten Flachseite (10) des Trägers (1) ist eine weitere Vertiefung (2) mit darin befestigtem weiterem faserförmigem Lichtwellenleiter (12) vorgesehen, dadurch gekennzeichnet, daß sich zwischen der Endfläche des weiteren Lichtwellenleiters (12) und der Endfläche des erstgenannten Lichtwellenleiters (13) kein Bestandteil des Trägers (1) außer der Platte (15) befindet.

2. Duplexer nach dem Oberbegriff von Anspruch 1, dadurch gekennzeichnet, daß die zweite Wandfläche (9) eine Durchbruchsöffnung (7) begrenzt, die sich zur zweiten Flachseite (11) hin weiter öffnet als zur ersten Flachseite (10).

3. Duplexer nach Anspruch 1, dadurch gekennzeichnet, daß daß die zweite Wandfläche (9) eine Durchbruchsöffnung (7) begrenzt, die sich zur zweiten Flachseite (11) hin weiter öffnet als zur ersten Flachseite (10).

4. Optischer Duplexer, der die Merkmale a bis e des Patentanspruches 1 aufweist und bei dem die zweite Wandfläche (9) Teil der Mantelfläche einer Hohlpyramide oder eines Hohlpyramidenstumpfes mit kristallographischen (1 1 1)-Ebenen ist, dadurch gekennzeichnet, daß die zweite Wandfläche (9) eine Durchbruchsöffnung (7) begrenzt, die sich zur zweiten Flachseite (11) hin weiter öffnet als zur ersten Flachseite (10), und daß eine Strahlungsquelle (18) so angeordnet ist, daß ihre Strahlung von einer zur Mantelfläche gehörenden Innenwandfläche (17) der Hohlpyramide beziehungsweise des Hohlpyramidenstumpfes durch die Platte (15) hindurch in den erstgenannten Lichtwellenleiter (13) hinein reflektiert wird.

5. Duplexer nach einem der vorangehenden Ansprüche, dadurch gekennzeichnet, daß auf der ersten Flachseite (10) des Trägers (1) ein Photodetektor (14) oder eine Strahlungsquelle so angeordnet ist, daß er beziehungsweise sie im Strahlengang liegt, wenn Strahlung aus dem erstgenannten Lichtwellenleiter (13) kommend durch dessen Endfläche austritt und von der Stirnseite (5) der erstgenannten Vertiefung (3) reflektiert wird.

6. Duplexer nach einem der vorangehenden Ansprüche, dadurch gekennzeichnet, daß die weitere Vertiefung (2) tiefer als die erste (3) ist.

7. Duplexer nach einem der vorangehenden Ansprüche, dadurch gekennzeichnet, daß wenigstens eine der Vertiefungen (2, 3) eine Nut ist.

8. Duplexer nach Anspruch 7, dadurch gekennzeichnet, daß die Nut eine V-Nut (2, 3) ist.

9. Duplexer nach einem der vorangehenden Ansprüche, dadurch gekennzeichnet, daß wenigstens eine der Vertiefungen (2, 3) anisotrop geätzt ist.

10. Duplexer nach einem der vorangehenden Ansprüche, dadurch gekennzeichnet, daß sich zwischen der zweiten Wandfläche (9) und der zweiten Flachseite (11) eine konkave Wölbung (9a, 9b) befindet.

11. Verfahren zur Herstellung eines strukturierten Trägers (1) aus einkristallinem Silizium, der zur Herstellung eines optischen Duplexers geeignet ist und der die Merkmale b und d von Patentanspruch 1 aufweist, gekennzeichnet durch folgende Herstellungsschritte:
a) ausgegangen wird von einem Wafer (1) aus Slizium mit parallel zur kristallographischen [1 0 0]-Richtung orientierten Flachseiten (10, 11),
b) der Wafer wird beidseitig mit einer gegen ein Ätzmedium resistenten Passivierungsschicht (21) versehen,
c) die Passivierungsschicht (21) wird mit einer Methode der Photolithographie ausgehend von Photomasken beidseitig strukturiert, wodurch auf einer ersten Flachseite (10) wenigstens zwei Fenster (22 oder 22a, 23) mit einem dazwischen liegenden Steg (21a) konstanter Breite und auf der anderen Flachseite (11) eine Fensteröffnung (27) entsteht, an denen die ungeschützte Silizium-Oberfläche des Wafers (1) zugänglich ist, wobei die seitlichen Stegkanten parallel zu einer kristallographischen [ 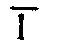 1 0]-Richtung ausgerichtet sind und die Projektion des Steges (21) in Richtung einer kristallographischen [ 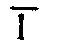 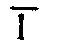 2]-Richtung auf die gegenüber liegende Flachseite (11) außerhalb der Fensteröffnung (27) und neben einer von deren Kanten liegt, die parallel zu den Kanten des Steges (21a) verläuft, wobei die Projektionsrichtung mit der ersten Flachseite (10) einen spitzen Winkel einschließt und parallel zu einer Ebene verläuft, die sich senkrecht zur ersten Flachseite (10) und zu den Kanten des Steges (21a) erstreckt,
d) durch die Fenster (22 oder 22a, 23) wird auf der ersten Flachseite (10) anisotrop geätzt zur Herstellung einer bis an eine Kante des Steges (21a) reichenden Vertiefung (3) für die Aufnahme eines Lichtwellenleiters und zur Herstellung einer weiteren bis an die andere Kante des Steges (21a) reichenden Vertiefung (2) und/oder einer Durchbruchsöffnung (7a),
e) auf der anderen, der ersten gegenüber liegenden Flachseite (11) wird durch eine Fensteröffnung (27) anisotrop geätzt, die gegenüber dem Steg (21a) angebracht und in der Größe so bemessen ist, daß während des Ätzprozesses zusammen mit der Ätzgrube, die sich ausgehend vom Fenster (22 oder 22a) für die weitere Vertiefung beziehungsweise für den die erste Flachseite (10) durchbrechenden Durchbruch (7a) ausbildet, die Durchbruchsöffnung (7 beziehungsweise 7a) durch den Wafer (1) entsteht,
f) der Ätzprozeß wird solange fortgesetzt, bis die Dicke der zwischen der Vertiefung (3) für den Lichtwellenleiter und der Durchbruchsöffnung (7 beziehungsweise 7a) liegenden planparallelen Platte (15) aus dem Material des Wafers (1) allein von der Breite des Steges (21a) bestimmt ist.
